# EUROPÄISCHE PATENTSCHRIFT

(11) **EP 1 171 332 B1**
(45) Veröffentlichungstag und Bekanntmachung des Hinweises auf die Patenterteilung: **11.06.2003**
(21) Anmeldenummer: 00917017.6
(22) Anmeldetag: 30.03.2000
(51) Int. Cl.: B60T 8/00

(54) **LENK- UND BREMSSYSTEM FÜR EIN FAHRZEUG**
STEERING AND BRAKING SYSTEM FOR A MOTOR VEHICLE
SYSTEME DE DIRECTION ET DE FREINAGE POUR AUTOMOBILE

(30) Priorität: 27.04.1999 DE 19918995
(43) Veröffentlichungstag der Anmeldung: 16.01.2002
(73) Patentinhaber: DaimlerChrysler AG, 70567 Stuttgart (DE)
(72) Erfinder: HEDENETZ, Bernd, D-73770 Denkendorf (DE)
(86) Internationale Anmeldenummer: EP0002815
(87) Internationale Veröffentlichungsnummer: WO00064716

(56) Entgegenhaltungen:
- EP-A- 0 754 611
- DE-A- 4 014 561
- DE-A- 4 339 570

## Beschreibung

Die Erfindung betrifft ein Lenk- und Bremssystem für ein Fahrzeug nach dem Oberbegriff des Anspruches 1.

Aus der EP 07 54 611 A1 ist ein drive-by-wire-Lenk- und Bremssystem bekannt, das eine Mehrzahl zum Teil redundant ausgelegter Systemkomponenten wie Recheneinheiten und Aktuatoren zur Beeinflussung der Lenkung und der Betriebsbremse des Fahrzeugs in Abhängigkeit sensorisch gemessener Größen und definierter Regelgesetze aufweist. Die Sensorsignale werden zunächst einer Recheneinheit mit drei synchron arbeitenden Rechenwerken zugeführt, in denen Stellsignale erzeugt werden, welche über eine als Datenbus ausgeführte Kommunikationseinrichtung Fahrzeugmodulen zugeführt werden, die jeweils eine eigene Energieversorgung und Stellglieder für Bremse, Lenkung, Aufhängung und Antrieb aufweisen. Die Kommunikationseinrichtung ist ebenso wie die Recheneinheit redundant ausgelegt und umfaßt insgesamt drei Datenbusse, auch die Energieversorgung des Systems ist redundant vorhanden.

Ausgehend von diesem Stand der Technik liegt der Erfindung das Problem zugrunde, ein zuverlässiges, fehlertolerantes und einfach aufgebautes drive-by-wire-System zu schaffen.

Dieses Problem wird erfindungsgemäß mit den Merkmalen des Anspruches 1 gelöst.

Das erfindungsgemäße Lenk- und Bremssystem ist als verteilter Regelkreis mit einer Recheneinheit zur Erzeugung der Sollsignale und einer Regeleinheit zur Erzeugung der Stellsignale für die Aktuatoren aufgebaut. Die Recheneinheit, die Regeleinheit sowie eine Zustandserfassungseinrichtung, in der die aktuelle Fahrzeugsituation beschreibende Zustandssignale ermittelt oder generiert werden, sind jeweils über einen Datenbus miteinander verbunden, über den Signale zwischen den verschiedenen Einheiten bzw. Einrichtungen in definierten zeitlichen Abständen aufeinanderfolgend übertragen werden. Die Signale der Einrichtungen und Einheiten werden in Zyklen zusammengefaßt, wobei in jedem Zyklus ein vollständiger Satz an Informationen über den Datenbus übertragbar ist.

Gemäß der Neuerung ist nunmehr vorgesehen, daß innerhalb eines Zyklus die Signale der verschiedenen Einheiten und Einrichtungen in einer bestimmten Reihenfolge bzw. Abfolge erzeugt und über den Datenbus übertragen werden, nämlich in der Abfolge Recheneinheit - Zustandserfassungseinrichtung - Regeleinheit. Pro Zyklus werden demzufolge zunächst in der Recheneinheit Sollsignale für Lenkung und/oder Bremse erzeugt und über den Datenbus übertragen, anschließend in der Zustandserfassungseinrichtung den Fahrzeugzustand beschreibende Signale generiert und über den Bus übertragen und schließlich in der Regeleinheit die Stellsignale für die Aktuatoren erzeugt, die ebenfalls über den Datenbus übertragen werden. Jede der Komponenten Recheneinheit, Zustandserfassungseinrichtung und Regeleinheit kann den Ausgangspunkt der Abfolge bilden, ohne die Abfolge selbst zu verändern. Anstelle der Reihenfolge Recheneinheit - Zustandserfassungseinrichtung - Regeleinheit kommen somit auch die Reihenfolgen Zustandserfassungseinrichtung - Regeleinheit - Recheneinheit sowie Regeleinheit - Recheneinheit - Zustandserfassungseinrichtung in Frage. Diese Reihenfolgen sind zueinander gleichwertig.

Da der Datenbus sämtliche Einrichtungen und Einheiten des Lenk- und Bremssystems miteinander verbindet, ist sichergestellt, daß die Signale einer Einheit oder Einrichtung allen weiteren Komponenten des Systems zur Verfügung stehen. Die definierte Abfolge Recheneinheit - Zustandserfassungseinrichtung - Regeleinheit stellt sicher, daß zunächst in der Recheneinheit die Sollsignale erzeugt werden, welche gegebenenfalls in der Zustandserfassungseinrichtung, zumindest aber in der Regeleinheit, in der zur Erzeugung von Stellsignalen ein Soll-Ist-Vergleich durchgeführt wird, benötigt werden. Die in der Zustandserfassungseinrichtung generierten Signale werden ebenfalls in der Regeleinheit zur Erzeugung der Ist- bzw. Stellsignale für die Aktuatoren der Bremse und der Lenkung benötigt.

Andererseits können von der Regeleinheit Informationen über den Istzustand der Aktuatoren und/oder der Regeleinheit selbst, beispielsweise eine Statusanzeige, aus der der momentane Betriebsstatus hervorgeht, über den Datenbus insbesondere der Recheneinheit zugeführt werden. Da die Signale der Regeleinheit am Ende eines Zyklus, die Signale der Recheneinheit aber am Anfang eines Zyklus erzeugt werden, kann die Recheneinheit zu Beginn eines folgenden Zyklus unmittelbar auf die Information der vorangegangenen Signale der Regeleinheit reagieren. Der Informationsfluß von der Regeleinheit zur Recheneinheit bietet den Vorteil, daß in der Recheneinheit in Abhängigkeit des Zustandes der Regeleinheit bzw. der Aktuatoren geeignete Strategien für die Berechnung der Sollwerte umgesetzt werden können, welche der aktuellen Situation angepaßt sind. Dadurch ist es insbesondere möglich, die Funktion einer fehlerhaften Regeleinheit oder eines fehlerhaften Aktuators ohne bzw. mit nur geringer Einschränkung der Funktionalität auf ausschließlich elektronischer Ebene aufrecht zu erhalten, so daß Fehlertoleranz ohne zusätzliche mechanische oder hydraulische Hardwarekomponente verwirklicht werden kann. Zusätzlich zur Fehlertoleranz bietet diese Realisierung den Vorteil, daß die Kosten und das Gewicht des Lenk- und Bremssystems reduziert werden.

Im Gegensatz zu Realisierungen aus dem Stand der Technik, die auf einer Ereignissteuerung basieren, wird bei vorliegender Erfindung ein zeitgesteuerter Ansatz eingesetzt, bei der Aktionen gemäß der vorgegebenen Kommunikationsmatrix zu festgelegten Zeitpunkten bzw. in vorgegebenen Zeitfenstern (Slots) ausgeführt werden, wobei jedem Zeitfenster eine Aktion einer Einrichtung bzw. Einheit zugeordnet wird. Die Dauer eines Zeitfensters bzw. der Abstand zwischen aufeinanderfolgenden Zeitfenstern ist zweckmäßigerweise konstant.

Dadurch können schnelle Regelkreise in verteilten Lenk- und Bremssystemen und die einfache Kopplung redundanter Recheneinheiten erreicht werden. Die zeitgesteuerte Signalübertragung über den Datenbus im Sinne einer Kommunikationsmatrix bzw. eines Kommunikationsschedules erhöht die Sicherheit, verbessert die Verfügbarkeit und kann in der Entwicklungsphase und der Qualitätssicherung einfacher auf die Funktionsfähigkeit getestet werden.

In zweckmäßiger Weiterführung ist zumindest ein Teil der Einheiten und Einrichtungen fehlertolerant, insbesondere redundant ausgeführt. Hierzu zählen bevorzugt die Recheneinheit zur Erzeugung der Sollsignale und die Regeleinheit für die Lenkung. Diese Einheiten müssen auch in Grenzbereichen des Fahrzeugs, in denen schnelle, geregelte Lenkeingriffe erforderlich sein können, zur Stabilisierung des Fahrzeugs voll funktionsfähig sein, da andernfalls der Verlust der Fahrzeugkontrolle droht. Bei fehlertoleranter Ausführung der die Lenkung betreffenden Einheiten wird die Beherrschbarkeit des Fahrzeugs auch bei Ausfall einer Funktion gewährleistet.

Dagegen ist es nicht zwingend erforderlich, auch die die Bremse betreffenden Einheiten fehlertolerant oder redundant auszuführen. Diese Einheiten können durch Abschalten in einen fail-safe-Zustand versetzt werden, bei dem keine fehlerhaften Signale mehr erzeugt werden. Die Bremsfunktion kann auch bei einem Ausfall einer einer bestimmten Radbremse zugeordneten Einheit durch eine oder mehrere der verbliebenen Einheiten der übrigen Radbremsen übernommen werden. Auch Funktionen, mittels denen Fahrwerksregelungen durchgeführt werden, müssen nicht fehlertolerant oder redundant ausgeführt sein.

Vorteilhaft senden und empfangen redundante Einheiten bzw. Einrichtungen die Signale zeitlich versetzt. Dadurch wird Fehlertoleranz gegenüber elektronischen Störungen, beispielsweise EMV-Störungen, erreicht. Für den Fall, daß einzelne Störungen innerhalb eines Zeitfensters liegen, in welchem das Signal einer Einheit bzw. einer Einrichtung versandt wird, steht im zeitversetzten Slot ein korrektes Signal der zweiten Einheit bzw. Einrichtung zur Verfügung. Die Nachrichten bzw. Signale redundanter Einheiten oder Einrichtungen werden vorzugsweise in unmittelbar aufeinanderfolgenden Zeitfenstern, zweckmäßig innerhalb eines Zyklus, verschickt, wodurch die Abstimmung der redundanten Nachrichten vereinfacht wird.

In einer bevorzugten Ausführung werden im Lenk- und Bremssystem in zumindest einer Einheit regelmäßig in jedem Zyklus Initialisierungssignale erzeugt und über den Datenbus versendet. Diese Initialisierungssignale dienen der Initialisierung und der Synchronisation der an den Datenbus angekoppelten Einheiten und Einrichtungen. Innerhalb eines Zyklus werden vorteilhaft von mindestens zwei verschiedenen Einheiten Initialisierungssignale erzeugt, wodurch die Ausfallsicherheit gegenüber elektromagnetischen Störungen erhöht wird. Bei den die Initialisierungssignale erzeugenden Einheiten handelt es sich zweckmäßig um Fahrzeugkomponenten mit vergleichbaren Aufgaben, insbesondere um Regeleinheiten, beispielsweise eine Mehrzahl von Brems-Regeleinheiten, die den unterschiedlichen Radbremsen zugeordnet sind. In zwei aufeinanderfolgenden Zyklen können die Initialisierungssignale in unterschiedlichen Einheiten erzeugt werden.

Vorteilhaft sind zwei Datenbusse vorgesehen, wobei auf beiden Datenbussen innerhalb eines Zyklus permanent und zeitgleich Signale verschickt werden, die sich jedoch unterscheiden können. Es hat sich insbesondere als vorteilhaft erwiesen, auf den beiden Datenbussen innerhalb eines Zyklus zeitlich abwechselnd Initialisierungssignale zu versenden.

Weitere Vorteile und zweckmäßige Ausführungsformen sind den weiteren Ansprüchen, der Figurenbeschreibung und den Zeichnungen zu entnehmen. Es zeigen:
- Fig. 1a: eine schematische Ansicht eines Fahrzeugs mit einem drive-by-wire-Bremssystem,
- Fig. 1b: eine dem Fahrzeug nach Fig. 1a zugeordnete Kommunikationsmatrix mit dem auf den Datenbussen verwendeten Signalschema,
- Fig. 2a, 2b,: eine den Fig. 1a, 1b vergleichbare Ansicht,
- 2c: jedoch mit einem drive-by-wire-Lenksystem,
- Fig. 3a, 3b: ein drive-by-wire-Lenk- und Bremssystem.

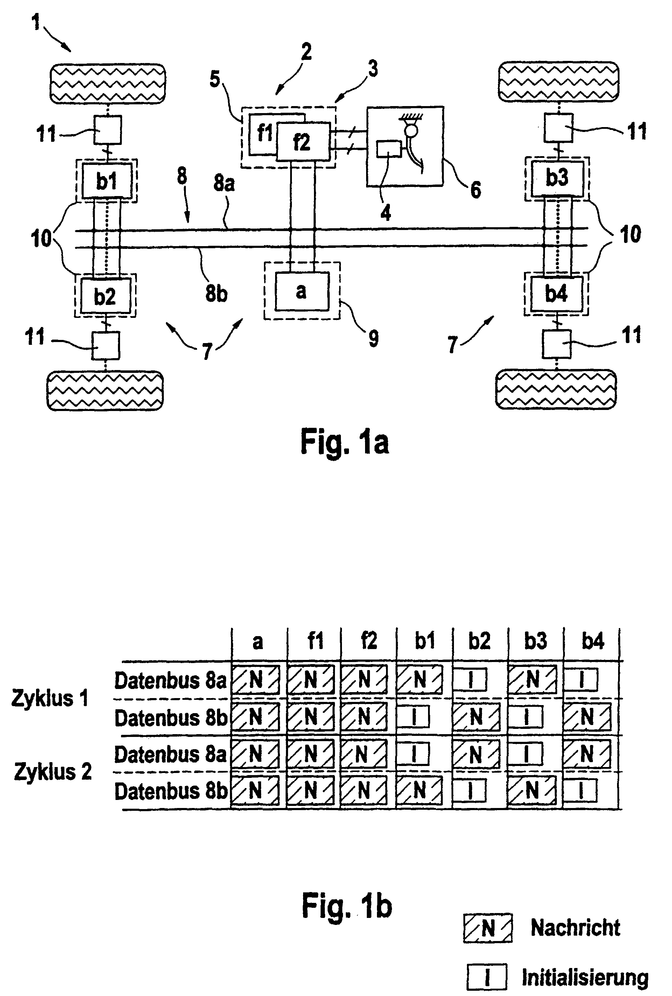

Bei den in den Fig. 1a bis 3b dargestellten Ausführungsbeispielen sind gleiche Bauteile mit gleichen Bezugszeichen versehen.

Das in Fig. 1a dargestellte Fahrzeug 1, insbesondere ein Kraftfahrzeug mit Brennkraftmaschine, weist ein drive-by-wire-System 2 auf, welches im gezeigten Ausführungsbeispiel als Bremssystem zur elektrischen bzw. elektronischen Steuerung und Regelung der Fahrzeugbremse ausgebildet ist. Das drive-by-wire-System 2 umfaßt eine Zustandserfassungseinrichtung 3, die zur Erzeugung von den Fahrzeugzustand beschreibenden Zustandssignalen herangezogen wird, eine Regel- und Steuereinheit 7 und von der Regel- und Steuereinheit 7 beaufschlagte Bremsaktuatoren 11 zur Betätigung der einzelnen Radbremsen. Die Zustandserfassungseinrichtung 3 und die Regel- und Steuereinheit 7 sind über eine Kommunikationseinrichtung 8 miteinander verbunden, über die Signale zwischen den einzelnen Einheiten und Einrichtungen ausgetauscht werden können.

Die Zustandserfassungseinrichtung 3 besteht aus einer Meßeinrichtung 4 zur Messung der Pedalbetätigung einer Pedaleinheit 6 und aus einer Berechnungseinheit 5 zur Auswertung der Meßsignale der Meßeinrichtung 4. Die Pedaleinheit 6 umfaßt im Ausführungsbeispiel nach Fig. 1a ein Bremspedal, dessen Position und/oder dessen Positionsänderung von der Meßeinrichtung 4 gemessen wird, wobei die Meßsignale der Berechnungseinheit 5 zugeführt und in der Berechnungseinheit 5 ausgewertet werden und insbesondere im Hinblick auf eine Fahrerwunschbewertung untersucht und weiterverarbeitet werden. Hieraus resultieren Zustandssignale, die den aktuellen Zustand der Pedaleinheit 6 beschreiben und die der Kommunikationseinrichtung 8 zur Weiterleitung an die weiteren Komponenten des Bremssystems zugeführt werden. Die Berechnungseinheit 5 ist redundant ausgelegt und besteht aus zwei Berechnungswerken f1, f2, in denen im wesentlichen die gleichen Operationen simultan ausgeführt werden.

Die Regel- und Steuereinheit 7 ist als verteilter Regelkreis konzipiert, dem eine Recheneinheit 9 mit einem Rechenwerk a sowie eine Regeleinheit 10 mit verteilten Brems-Regeleinheiten b1, b2, b3, b4 für jeweils eine Radbremse an einem Rad des Fahrzeugs zugeordnet sind. In dem Rechenwerk a der Recheneinheit 9 werden in Abhängigkeit von fahrzeugspezifischen Zustandsgrößen, wie zum Beispiel Schwimmwinkel, Geschwindigkeit, Beschleunigungen etc., Sollsignale für die Bremse erzeugt, wobei die Sollsignale über die Kommunikationseinrichtung 8 den weiteren Systemkomponenten zur Verfügung gestellt werden. In den Brems-Regeleinheiten b1, b2, b3, b4 werden gemäß einem hinterlegten Regelgesetz unter Berücksichtigung der Sollsignale sowie von Istsignalen Stellsignale generiert, die den Bremsaktuatoren 11 zur Betätigung der einzelnen Radbremsen zugeführt werden.

Auch die Kommunikationseinrichtung 8 ist redundant aufgebaut und besteht aus zwei Datenbussen 8a, 8b, die die verschiedenen Komponenten des Bremssystems für eine Signalübertragung miteinander verknüpfen.

Fig. 1b zeigt in schematischer Darstellung eine Kommunikationsmatrix, aus der die zeitliche Reihenfolge der Datenübermittlung über die Datenbusse zwischen den verschiedenen Komponenten des Bremssystems hervorgeht. Die Spalten der Kommunikationsmatrix markieren Zeitfenster bzw. Slots, jedem Slot ist eine Signalübertragung N oder I einer Komponente a, f1, f2, b1, b2, b3, b4 des Bremssystems zugeordnet, wobei mit N ein Nachrichtenwert und mit I ein Initialisierungswert bezeichnet wird. Die Zeilen der Kommunikationsmatrix stellen die Nachrichtenübermittlung in zwei aufeinanderfolgenden Zyklen dar, innerhalb eines Zyklus werden auf zwei parallel angeordneten Bussen synchron Daten übertragen.

Die Reihenfolge innerhalb eines Zyklus bleibt - bezogen auf die Systemkomponenten als Ganzes - über alle Zyklen erhalten und ist für beide Datenbusse identisch, die Signale werden in jedem Zyklus in der Reihenfolge Recheneinheit - Zustandserfassungseinrichtung - Regeleinheit über die Kommunikationseinrichtung übertragen.

Alternativ hierzu können die Signale in der Reihenfolge Zustandserfassungseinrichtung - Regeleinheit - Recheneinheit sowie Regeleinheit - Recheneinheit - Zustandserfassungseinrichtung übertragen werden. Auch bei diesen Reihenfolgen bleibt die Abfolge dieser drei Einheiten/Einrichtungen relativ zueinander gleich. Jede der Einheiten/Einrichtungen kann innerhalb der Abfolge einen Ausgangspunkt für eine der genannten Reihenfolgen für die Signalübertragung in einem Zyklus bilden, die Abfolge selbst ist unabhängig vom Ausgangspunkt. Jeder Reihenfolge können weitere Komponenten des Lenk- und Bremssystems vor- oder nachgeschaltet sein; in diesem Fall bezieht sich der Ausgangspunkt nur auf den Beginn der Signalübertragung innerhalb der Abfolge Recheneinheit - Zustandserfassungseinrichtung - Regeleinheit. Gegebenenfalls ändert sich der Ausgangspunkt der Abfolge über die Zyklen gesehen.

Pro Zyklus wird im Rechenwerk a der Recheneinheit 9 zunächst ein Nachrichtenwert N über die Kommunikationseinrichtung übermittelt, anschließend folgt ein Nachrichtenwert N der Berechnungswerke f1, f2 der Zustandserfassungseinrichtung 3 und zuletzt werden Nachrichtenwerte N und Initialisierungswerte I der Brems-Regeleinheiten b1 bis b4 übermittelt. Der Nachrichtenwert N der Recheneinheit 9 mit dem Rechenwerk a repräsentiert Sollsignale, der Nachrichtenwert N der Zustandseinrichtung 3 mit den Berechnungswerken f1, f2 repräsentiert Zustandssignale, welche den Zustand des Bremspedals oder den Fahrerwunsch entsprechend der Bremspedalstellung darstellen, und der Nachrichtenwert N der Brems-Regeleinheiten b1 bis b4 repräsentiert Istsignale, welche den Status der Bremsaktuatoren 11 der vier Radbremsen darstellen. Der Initialisierungswert I der Brems-Regeleinheiten b1 bis b4 dient der Initialisierung und der Synchronisation der an den Datenbus angekoppelten Einheiten und Einrichtungen.

Innerhalb eines Zyklus unterscheidet sich der zu übertragende Signaltyp zwischen den beiden Datenbussen nur in bezug auf die Regeleinheiten b1 bis b4. Im Zyklus 1 werden auf dem Bus 1 bei den Brems-Regeleinheiten abwechselnd Nachrichtenwerte N und Initialisierungswerte I übertragen, beginnend mit einem Nachrichtenwert N im Zeitfenster der ersten Brems-Regeleinheit b1. Im gleichen Zyklus werden zeitgleich Signale auf dem Bus 2 übertragen, wobei der Signaltyp der Recheneinheit mit dem Rechenwerk a und der Signaltyp der Zustandserfassungseinrichtung mit den Berechnungswerken f1, f2 auf beiden Bussen identisch ist; es werden ausschließlich Nachrichtenwerte N übertragen. Bei den Brems-Regeleinheiten b1 bis b4 werden Nachrichtenwerte N und Initialisierungswerte I innerhalb eines Zeitfensters, jedoch auf verschiedenen Datenbussen, bezogen auf eine Brems-Regeleinheit versetzt gesendet, so daß einem Nachrichtenwert N auf dem Bus 1 ein Initialisierungswert I auf dem Bus 2 bzw. umgekehrt zugeordnet ist.

Auch im darauffolgenden Zyklus unterscheiden sich der Signaltyp für die Recheneinheit und die Zustandserfassungseinrichtung nicht, es werden für diese beiden Systemkomponenten auf allen Zeitfenstern für beide Busse Nachrichtenwerte N versandt. Bei den Brems-Regeleinheiten b1 bis b4 werden wiederum bezogen auf die beiden Datenbusse versetzt Nachrichtenwerte N und Initialisierungswerte I versandt, jedoch ist die Reihenfolge gegenüber dem ersten Zyklus vertauscht worden.

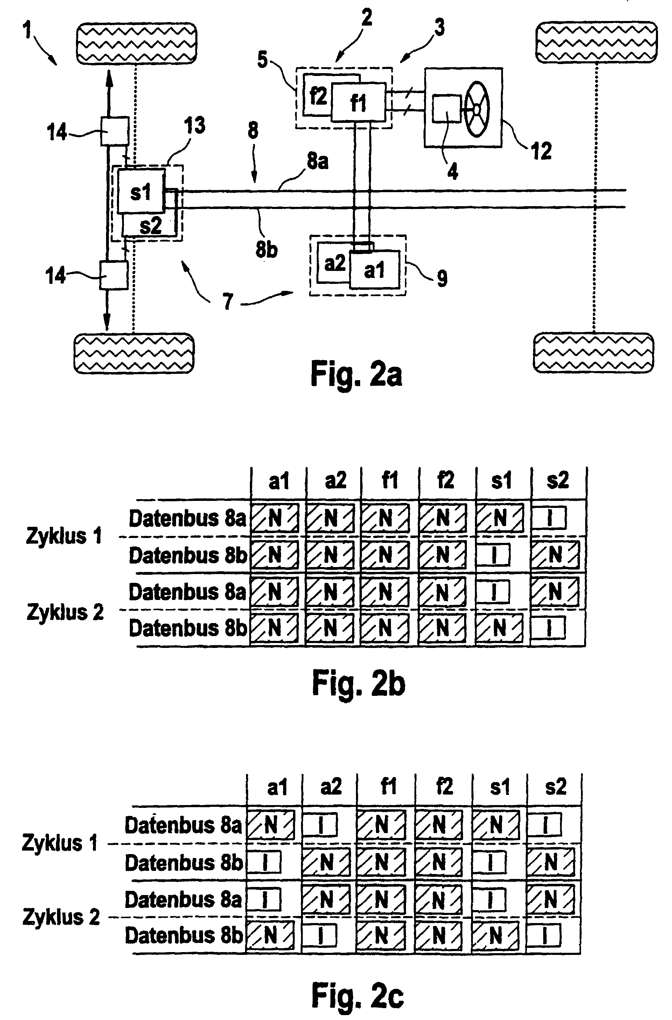

Bei dem in den Fig. 2a bis 2c dargestellten Ausführungsbeispiel ist das Fahrzeug 1 mit einem als Lenksystem ausgebildeten drive-by-wire-System 2 ausgestattet. Das Lenksystem umfaßt wiederum eine Zustandserfassungseinrichtung 3, eine Recheneinheit 9, eine Regel- und Steuereinheit 7 sowie Lenkaktuatoren 14, wobei zur Signalübertragung eine Kommunikationseinrichtung 8 mit zwei Datenbussen 8a, b vorgesehen ist. Zur Zustandserfassungseinrichtung 3 gehört eine Meßeinrichtung 4, die den Lenkwinkel und gegebenenfalls auch die Lenkwinkelgeschwindigkeit einer Lenkeinheit 12 mißt, sowie die redundant mit zwei Berechnungswerken f1, f2 ausgeführte Berechnungseinheit 5, die die Meßsignale der Meßeinrichtung 4 verarbeitet, insbesondere im Hinblick auf eine Fahrerwunschbewertung, und hieraus Zustandssignale generiert, welche den weiteren Systemkomponenten des Lenksystems zur Verfügung gestellt werden.

Die Regel- und Steuereinheit 7 umfaßt die Recheneinheit 9, die redundant mit zwei Rechenwerken a1, a2 ausgeführt ist und in Abhängigkeit von Fahrzeug-Zustandsgrößen Sollsignale für die Lenkung generiert, und die ebenfalls redundant ausgeführte Regeleinheit 13, welche zwei Lenk-Regeleinheiten s1, s2 aufweist, in denen Stellsignale für die Lenkaktuatoren 14 erzeugt werden.

Die Kommunikationsmatrix gemäß Fig. 2b zeigt ein bevorzugtes Ablaufschema für die Signalübertragung auf der Kommunikationseinrichtung 8 für ein Lenksystem gemäß Fig. 2a. Es werden generell pro Zyklus und in jedem Datenbus zunächst Nachrichtenwerte N der zwei Rechenwerke a1, a2 der Recheneinheit 9, anschließend Nachrichtenwerte N der Berechnungswerke f1, f2 der Zustandserfassungseinrichtung 3 und schließlich abwechselnd Nachrichtenwerte N und Initialisierungswerte I der Lenk-Regeleinheiten s1, s2 übertragen. Im ersten Zyklus wird im Bus 1 im Bereich der Regeleinheit 13 zunächst ein Nachrichtenwert N in der Lenk-Regeleinheit s1 übertragen, anschließend erfolgt im nächsten Zeitfenster die Übertragung eines Initialisierungswertes I in der Lenk-Regeleinheit s2. Im Bus 2 wird in umgekehrter Reihenfolge im Bereich der Regeleinheit 13 von s1 zunächst ein Initialisierungswert I und anschließend von s2 ein Nachrichtenwert N übertragen. Im zweiten Zyklus wird in Bus 1 im Zeitfenster von s1 mit einem Initialisierungswert I begonnen, in s2 wird ein Nachrichtenwert versendet; in Bus 2 wird der Signaltyp in umgekehrter Reihenfolge erzeugt.

Fig. 2c zeigt ein weiteres Beispiel für eine Kommunikationsmatrix, die eine schnellere Rekonfiguration im Fehlerfall ermöglicht. Im Bereich der ersten zwei Zeitfenster, die den Rechenwerken a1, a2 der Recheneinheit 9 zugeordnet sind, erfolgt sowohl in der Zeitachse fortschreitend als auch im Unterschied von Bus 1 zu Bus 2 gesehen eine zwischen den Signaltypen Nachrichtenwert N und Initialisierungswert I wechselnde Signalübertragung. Zusätzlich werden im Bereich der Lenk-Regeleinheiten s1, s2 abwechselnd Nachrichten- und Initialisierungswerte übertragen.

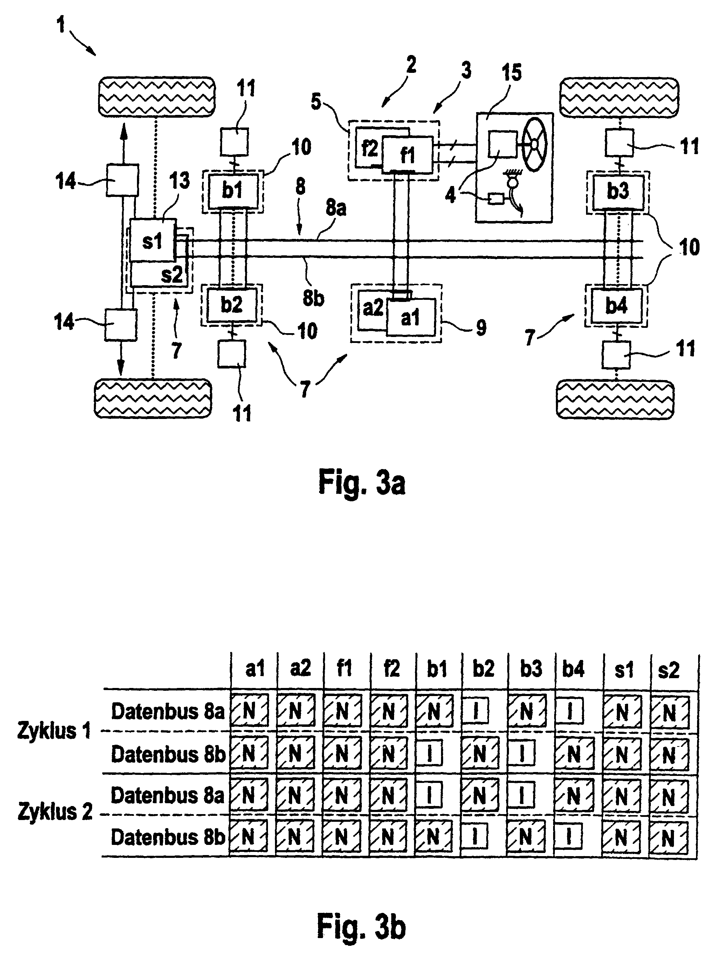

In den Fig. 3a und 3b ist eine Ausführung mit einem kombinierten Lenk- und Bremssystem gezeigt, die wie in den vorangegangenen Beispielen eine Zustandserfassungseinrichtung 3, eine Regel- und Steuereinheit 7, diverse Aktuatoren 11, 14 sowie eine Kommunikationseinrichtung 8 mit zwei Datenbussen 8a, b umfaßt. Zur Zustandserfassungseinrichtung 3 gehört die Meßeinrichtung 4 sowie die Berechnungseinheit 5 mit den Berechnungswerken f1, f2, wobei die Meßeinrichtung 4 Sensoren für die Messung der Lenkbetätigung und der Bremsenbetätigung einer Lenk- und Bremseinheit 15 umfaßt. Die Meßsignale werden in der Zustandserfassungseinrichtung 5 bewertet und in Zustandssignale umgewandelt, die der Kommunikationseinrichtung 8 zugeführt werden. Die Regel- und Steuereinheit 7 ist als verteilter Regelkreis ausgeführt und umfaßt neben der redundant mit zwei Rechenwerken a1, a1 ausgeführten Recheneinheit 9 eine erste Regeleinheit 10 für die Radbremse mit insgesamt vier verteilten Brems-Regeleinheiten b1 bis b4 sowie eine zweite Regeleinheit 13 für die Lenkung mit redundant ausgeführten Lenk-Regeleinheiten s1, s2. Den Regeleinheiten 10, 13 sind jeweils Aktuatoren 11, 14 für die Bremsung und die Lenkung zugeordnet.

Gemäß der Kommunikationsmatrix nach Fig. 3b werden die Signale über die Kommunikationseinrichtung 8 in jedem Zyklus und in jedem Datenbus in der Zeitreihenfolge Recheneinheit 9 - Zustandserfassungseinrichtung 3 - Regeleinheit 10 für die Bremse - Regeleinheit 13 für die Lenkung übertragen. In den Zeitfenstern der Recheneinheit 9 mit den beiden Rechenwerken a1, a2 und der Zustandserfassungseinrichtung 3 mit den Berechnungswerken f1, f2 werden in allen Zyklen und auf beiden Bussen ausschließlich Nachrichtenwerte N übertragen, ebenso in den beiden letzten Zeitfenstern, die den Lenk-Regeleinheiten s1 s2 zugeordnet sind. Das Übertragungsschema für die Brems-Regeleinheiten b1 bis b4, deren Daten zeitlich vor denen der Lenk-Regeleinheiten s1, s2 übertragen werden, gleicht dem in der Kommunikationsmatrix nach Fig. 1b beschriebenen Schema; es werden zeitlich versetzt sowie auf beiden Bussen versetzt und auch in aufeinanderfolgenden Zyklen versetzt abwechselnd Nachrichtenwerte N und Initialisierungswerte I generiert.

## Patentansprüche

1. Lenk- und Bremssystem für ein Fahrzeug, mit mindestens einer Zustandserfassungseinrichtung (3) zur Erzeugung von den Fahrzeugzustand beschreibenden Zustandssignalen und mit mindestens einer Regel- und Steuereinheit (7), welche in Abhängigkeit der Zustandssignale Stellsignale für die Einstellung von Lenk- und Bremsaktuatoren (11, 14) erzeugt, wobei mindestens ein Datenbus (8a, 8b) zur Übertragung der Signale zwischen der Zustandserfassungseinrichtung (3), der Steuer- und Regeleinheit (7) und den Aktuatoren (11, 14) vorgesehen ist, wobei die Regel- und Steuereinheit (7) eine Recheneinheit (9) und eine Regeleinheit (10, 13) umfaßt, wobei in der Recheneinheit (9) Sollsignale für die Lenkung und die Bremse erzeugt und in der Regeleinheit (10, 13) Stellsiganale für die Aktuatoren (11, 14) erzeugt werden,
**dadurch gekennzeichnet,**
- **daß** die Signale sämtlicher Einrichtungen (3) und Einheiten (9, 10, 13) des Lenk- und Bremssystems in definierten zeitlichen Abständen aufeinanderfolgend in Zyklen generiert werden,
- **daß** in jedem Zyklus die Signale in der Abfolge Recheneinheit (9) - Zustandserfassungseinrichtung (3) - Regeleinheit (10, 13) erzeugt werden, wobei eine dieser Einrichtungen (3) bzw. Einheiten (9, 10, 13) innerhalb eines Zyklus einen Ausgangspunkt bildet und die Abfolge unabhängig vom Ausgangspunkt gleich bleibt.

2. Lenk- und Bremssystem nach Anspruch 1,
**dadurch gekennzeichnet,**
**daß** mindestens eine Einheit (9, 13) bzw. Einrichtung (3) redundant ausgelegt ist.

3. Lenk- und Bremssystem nach Anspruch 2,
**dadurch gekennzeichnet,**
**daß** redundante Einheiten (9, 13) bzw. Einrichtungen (3) zeitlich versetzt Signale senden bzw. empfangen.

4. Lenk- und Bremssystem nach Anspruch 2 oder 3,
**dadurch gekennzeichnet,**
**daß** zwei Rechenwerke (al, a2) der Recheneinheit (9) vorgesehen sind.

5. Lenk- und Bremssystem nach einem der Ansprüche 2 bis 4,
**dadurch gekennzeichnet,**
**daß** zwei Berechnungswerke (f1, f2) einer Berechnungseinheit (5) der Zustandserfassungseinrichtung (3) vorgesehen sind.

6. Lenk- und Bremssystem nach einem der Ansprüche 2 bis 5,
**dadurch gekennzeichnet,**
**daß** zwei Lenk-Regeleinheiten (s1, s2) vorgesehen sind.

7. Lenk- und Bremssystem nach einem der Ansprüche 1 bis 6,
**dadurch gekennzeichnet,**
**daß** in jedem Zyklus in zumindest einer Einheit (10, 13) bzw. Einrichtung (3) ein Signal mit einem Initialisierungswert (I) erzeugbar ist.

8. Lenk- und Bremssystem nach Anspruch 7,
**dadurch gekennzeichnet,**
**daß** in jedem Zyklus zumindest zwei Signale mit Initialisierungswerten (I) erzeugbar sind.

9. Lenk- und Bremssystem nach Anspruch 7 oder 8,
**dadurch gekennzeichnet,**
**daß** in aufeinanderfolgenden Zyklen in verschiedenen Werken (b1 bis b4; s1, s2) der Einheiten (10, 13) bzw. Einrichtungen (3) Signale mit Initialisierungswerten (I) erzeugbar sind.

10. Lenk- und Bremssystem nach einem der Ansprüche 1 bis 9,
**dadurch gekennzeichnet,**
**daß** der Datenbus (8a, 8b) redundant ausgelegt ist.

11. Lenk- und Bremssystem nach Anspruch 10,
**dadurch gekennzeichnet,**
**daß** in jedem Zyklus auf beiden Datenbussen (8a, 8b) zeitgleich eine Signalübertragung stattfindet, wobei die Signale sich zumindest teilweise unterscheiden.

12. Lenk- und Bremssystem nach Anspruch 11,
**dadurch gekennzeichnet,**
**daß** auf den beiden Datenbussen (8a, 8b) zeitversetzt Initialisierungswerte (I) übertragen werden.

13. Lenk- und Bremssystem nach Anspruch 12,
**dadurch gekennzeichnet,**
**daß** die Initialisierungswerte (I) in den Regeleinheiten (10, 13) der Aktuatoren (11, 14) erzeugbar sind.

14. Lenk- und Bremssystem nach Anspruch 13,
**dadurch gekennzeichnet,**
**daß** bei Einsatz sowohl von Lenkaktuatoren (14) als auch von Bremsaktuatoren (11) die Signale mit den Initialisierungswerten (I) in den Brems-Regeleinheiten (b1, b2, b3, b4) erzeugt werden.

15. Lenk- und Bremssystem nach einem der Ansprüche 1 bis 14,
**dadurch gekennzeichnet,**
**daß** die Zustandserfassungseinrichtung (3) eine Meßeinrichtung (4) für den Lenkzustand und den Bremspedalzustand sowie eine Berechnungseinheit (5) zur Verarbeitung der Meßsignale in Zustandssignale umfaßt.

16. Lenk- und Bremssystem nach einem der Ansprüche 1 bis 15,
**dadurch gekennzeichnet,**
**daß** die Recheneinheit (9) zur Erzeugung der Sollsignale Meßsignale mit fahrzeugspezifischen Zustandsgrößen empfängt und verarbeitet.

## Claims

1. Steering and brake system for a motor vehicle, having at least a status detection system (3) for generating status signals describing the vehicle status and at least one automatic control unit (7), which generates actuating signals for adjusting steering and brake actuators (11, 14) depending on the status signals, at least one data bus (8a, 8b) being provided in order to transmit signals between the status detection system (3), the automatic control unit (7) and the actuators (11, 14), and the automatic control unit (7) comprises a computer unit (9) and a control unit (10, 13), the computer unit (9) generating desired signals for the steering and the brake and the control unit (10, 13) generating actuating signals for the actuators (11, 14),
**characterised in that**
- the signals of all the systems (3) and units (9, 10, 13) of the steering and brake system are generated in cycles at defined time intervals,
- the signals are generated in the sequence order of computer unit (9) - status detection system (3) - control unit (10, 13) in every cycle and one of these systems (3) or units (9, 10, 13) may constitute a starting point within a cycle and the order of sequence remains the same irrespective of the starting point.

2. Steering and brake system as claimed in claim 1,
**characterised in that**
at least one unit (9, 13) or system (3) is of a redundant design.

3. Steering and brake system as claimed in claim 2,
**characterised in that**
the redundant units (9, 13) or systems (3) send and receive signals with a time lag.

4. Steering and brake system as claimed in claim 2 or 3,
**characterised in that**
the computer unit (9) is provided with two arithmetic-logic units (a1, a2).

5. Steering and brake system as claimed in one of claims 2 to 4,
**characterised in that**
a calculation unit (5) of the status detection system (3) is provided with two arithmetic units (f1, f2).

6. Steering and brake system as claimed in one of claims 2 to 5,
**characterised in that**
two steering control units (s1, s2) are provided.

7. Steering and brake system as claimed in one of claims 1 to 6,
**characterised in that**
a signal with an initialisation value (I) can be generated in at least one unit (10, 13) or system (3) in every cycle.

8. Steering and brake system as claimed in claim 7
**characterised in that**
at least two signals with initialisation values (I) can be generated in every cycle.

9. Steering and brake system as claimed in claim 7 or 8,
**characterised in that**
signals with initialisation values (I) can be generated in successive cycles in different units (b1 to b4; s1, s2) of the units (10, 13) or systems (3).

10. Steering and brake system as claimed in one of claims 1 to 9,
**characterised in that**
the data bus (8a, 8b) is of a redundant design.

11. Steering and brake system as claimed in claim 10,
**characterised in that**
a signal transmission takes place synchronously on both data buses (8a, 8b) in every cycle, the signals being at least partially different from one another.

12. Steering and brake system as claimed in claim 11,
**characterised in that**
initialisation values (I) are transmitted on the two data buses (8a, 8b) with a time lag.

13. Steering and brake system as claimed in claim 12,
**characterised in that**
the initialisation values (I) can be generated in the control units (10, 13) of the actuators (11, 14).

14. Steering and brake system as claimed in claim 13,
**characterised in that**
if using both steering actuators (14) and brake actuators (11), the signals with the initialisation values (I) are generated in the brake control units (b1, b2, b3, b4).

15. Steering and brake system as claimed in one of claims 1 to 14,
**characterised in that**
the status detection system (3) has a measuring system (4) for the steering status and the brake pedal status and a calculation unit (5) for processing the measurement signals to produce status signals.

16. Steering and brake system as claimed in one of claims 1 to 15,
**characterised in that**
the computer unit (9) for generating the desired signals receives and processes measurement signals with vehicle-specific status variables.

## Revendications

1. Système de direction et de freinage pour automobile avec au moins un dispositif de saisie d'état (3) destiné à la génération de signaux d'état décrivant l'état du véhicule et avec au moins une unité de régulation et de commande (7), générant en fonction des signaux d'état des signaux correcteurs destinés au réglage d'actionneurs de direction et de freinage (11, 14), un bus de données (8a, 8b) au moins destiné à la transmission des signaux entre le dispositif de saisie d'état (3), l'unité de régulation et de commande (7) et les actionneurs (11, 14) étant prévu , par ailleurs, l'unité de régulation et de commande (7) comportant un organe de calcul (9) et un organe de régulation (10, 13), des signaux de consigne étant générés dans l'organe de calcul (9), destinés à la direction et au freinage, et des signaux correcteurs étant générés dans l'organe de régulation (10, 13), destinés aux actionneurs (11, 14), **caractérisé en ce que**
- les signaux de tous les dispositifs (3) et organes (9, 10, 13) du système de direction et de freinage sont générés par cycles successifs dans des laps de temps définis,
- les signaux au sein de chaque cycle, sont générés dans la succession organe de calcul (9) - dispositif de saisie d'état (3) - organe de régulation (10, 13), un de ces dispositifs (3) ou de ces organes (9, 10, 13) formant au sein d'un cycle un point de départ et la succession restant la même, indépendamment du point de départ.

2. Système de direction et de freinage selon la revendication 1, **caractérisé en ce qu**'au moins un organe (9, 13) ou un équipement (3) est prévu avec une redondance.

3. Système de direction et de freinage selon la revendication 2, **caractérisé en ce que** des organes (9, 13) ou les équipements (3) redondants émettent ou reçoivent des signaux par décalage dans le temps.

4. Système de direction et de freinage selon la revendication 2 ou 3, **caractérisé en ce que** deux unités arithmétiques (a1, a2) de l'organe de calcul (9) sont prévues.

5. Système de direction et de freinage selon l'une quelconque des revendications 2 à 4, **caractérisé en ce que** deux logiques de calcul (f1, f2) d'une unité de calcul (5) du dispositif de saisie d'état (3) sont prévues.

6. Système de direction et de freinage selon l'une quelconque des revendications 2 à 5, **caractérisé en ce que** deux unités de régulation de la direction (s1, s2) sont prévus.

7. Système de direction et de freinage selon l'une quelconque des revendications 1 à 6, **caractérisé en ce qu'au** sein de chaque cycle dans un organe (10, 13) ou un équipement (3) au moins, un signal avec valeur d'initialisation (I) peut être généré.

8. Système de direction et de freinage selon la revendication 7, **caractérisé en ce qu'**au sein de chaque cycle, deux signaux au moins avec valeurs d'initialisation (I) peuvent être générés.

9. Système de direction et de freinage selon la revendication 7 ou 8, **caractérisé en ce qu**'au sein de cycles successifs dans différentes logiques (b1 à b4, s1, s2) des unités (10, 13) ou dispositifs, des signaux avec valeurs d'initialisation (I) peuvent être générés.

10. Système de direction et de freinage selon l'une quelconque des revendications 1 à 9, **caractérisé en ce que** le bus de données (8a, 8b) est prévu avec une redondance.

11. Système de direction et de freinage selon la revendication 10, **caractérisé en ce qu'**au sein de chaque cycle sur les deux bus de données (8a, 8b) a lieu simultanément un transfert de données, les signaux différant, du moins en partie, l'un de l'autre.

12. Système de direction et de freinage selon la revendication 11, **caractérisé en ce que** des valeurs d'initialisation (I) sont transmises avec retard de temps sur les deux bus de données (8a, 8b).

13. Système de direction et de freinage selon la revendication 12, **caractérisé en ce que** les valeurs d'initialisation (I) peuvent être générées dans les organes de régulation (10, 13) des actionneurs (11, 14).

14. Système de direction et de freinage selon la revendication 13, **caractérisé en ce que** lors de la mise en oeuvre d'actionneurs de direction (14) et d'actionneurs de freinage (11), les signaux avec les valeurs d'initialisation (I) sont générés dans les unités de régulation du freinage (b1, b2, b3, b4).

15. Système de direction et de freinage selon l'une quelconque des revendications 1 à 14, **caractérisé en ce que** le dispositif de saisie d'état (3) comporte un dispositif de mesure (4) de l'état de la direction et de l'état de la pédale de freinage, de même qu'une unité de calcul (5) destinée au traitement des signaux mesurés en signaux d'état.

16. Système de direction et de freinage selon l'une quelconque des revendications 1 à 15, **caractérisé en ce que** l'organe de calcul (9) de génération de signaux de consigne reçoit et traite des signaux mesurés avec des grandeurs d'état spécifiques au véhicule.
